Europäisches Patentamt

European Patent Office

Office européen des brevets

(11) Publication number: **0 253 596**
**A1**

## (12) EUROPEAN PATENT APPLICATION

(21) Application number: **87306142.8**

(22) Date of filing: **10.07.87**

(51) Int. Cl.⁴: **C22B 1/00** , **F26B 23/02**

(30) Priority: **12.07.86 GB 8617045**

(43) Date of publication of application:
**20.01.88 Bulletin 88/03**

(84) Designated Contracting States:
**AT BE CH DE ES FR GB IT LI LU NL SE**

(71) Applicant: **McKechnie Metals Limited
Middlemore Lane
Aldridge Walsall, WS9 8DN(GB)**

(72) Inventor: **Goddard, Charles Brian
Plot A,The Old School House Close
Cropwell Butler,Nottingham(GB)**
Inventor: **Keirle, Trevor James
7 St.Lukes Road,Burntwood
Walsall West Midlands WS7 0DH(GB)**

(74) Representative: **Lomas, Geoffrey Michael et al
BARKER, BRETTELL & DUNCAN 138 Hagley
Road Edgbaston
Birmingham B16 9PW(GB)**

(54) Process for drying swarf or other small items contaminated with volatile substances.

(57) A process for use in removing oil from metal swarf which comprises agitating the swarf (7) in a porous drum (6) above an arcuate plenum chamber (8) and blowing by forced convective flow hot gas into the plenum chamber and upwardly through a bed of swarf (7) moving lengthwise through the drum (6) immediately above it. The forced convective flow through the drum then passes through a dust extractor (5) and fluidised bed incinerator (13) where the combustible products are burnt and the heat used to reheat the circulating gas which returns to the drum (6) through a fan or blower (21) to continue the process and maintain the gas pressure.

EP 0 253 596 A1

## PROCESS FOR DRYING SWARF OR OTHER SMALL ITEMS CONTAMINATED WITH VOLATILE SUBSTANCES

This invention relates primarily to a process for drying ferrous or non-ferous swarf, that is removing cutting fluid from the swarf, but it might also be applied to the cleaning of other small items contaminated with oil or other volatile and/or combustible substances.

Non-ferrous swarf, such as copper, brass, or aluminium swarf, is valuable material, and is usually dried and reprocessed.

In the conventional process for drying non-ferrous swarf, a rotary kiln in the form of a heated drum with internal flights or lifters arranged in a helical manner is rotated about its horizontal axis, swarf is fed to one end for carrying through the drum by the flights, and the hot gases produced are ignited within the drum. The products of combustion are then passed through an afterburner. The fumes produced by this process are contaminated with metal, metal oxide and dust particles, and therefore need to be cleaned in some way before they can be released to atmosphere.

The problem of reducing air pollution is increasingly important in present day industrial environments and efficient methods of processing swarf are therefore very desirable.

It is an object of the present invention to provide an improved process for cleaning swarf and other small metallic items contaminated with oil or other volatile and/or combustible substances.

It is another object of the invention to provide efficient apparatus for carrying out the process which is both simple in construction and compact.

According to one aspect of the invention a process for drying swarf contaminated with cutting fluid comprises subjecting the swarf to a forced convective flow of hot gas in a drying chamber.

The exhaust gas from the drying chamber is preferably burnt in an incinerator to generate heat which is used to provide an elevated temperature for the gas supply to the drying chamber.

According to a second aspect of the invention a process for cleaning small items contaminated with oil or other volatile and/or combustible substances comprises subjecting the elements to a forced convective flow of hot gas in a drying chamber, burning the exhaust gases in an incinerator to generate heat which is used to elevate the temperature of the gas supply to the drying chamber.

Preferably a proportion of the burnt gas itself is used as the gas supply to the drying chamber, after cooling to a suitable temperature. Such a process can be self-sustaining, not requiring any external heating means, except on start-up.

A dust separator is preferably interposed between the outlet of the drying chamber and the inlet of the incinerator for removing metal dust which would otherwise contaminate the products of combustion of the incinerator.

The forced convective flow of hot gas in the drying chamber is preferably arranged to pass through the swarf mass. The swarf is preferably supported on a porous support through which the drying gas is forced under pressure, preferably from a plenum chamber of which one wall extends over a portion of the porous support.

The porous support is preferably in the form of a rotating drum provided with means for causing the swarf to be carried through the drum, and the plenum chamber is preferably an arcuate chamber which extends substantially beneath that lower portion of the drum which the swarf occupies when the drum is rotating so that the bed of swarf is supported closely adjacent to the plenum chamber and the hot gas flows directly through bed in an upwards direction.

Alternatively the porous support could be the porous base of a vibrating channel conveyor.

The dust separator is preferably of the cyclone type.

The incinerator is preferably arranged to utilise combustion air in stoichiometric amounts. The exhaust gases can thus be arranged to be inert so that when they are used to dry the swarf, substantially no oxidation of the swarf takes place.

The incinerator preferably comprises a fluidised bed for better control of the burning gases, but other types of incinerator could be used.

In order to reduce the temperature of the incinerator exhaust gases for recirculation to the drying chamber, the exhaust gases are passed through a suitable heat exchanger, and since the exhaust gases are initially at, say, 900°C and need to be cooled to, say, 300°C the heat extracted by the heat exchanger is high grade heat which can be used for many purposes.

The heat exchanger is preferably positioned directly above the incinerator to receive the upwardly rising gases.

According to another aspect of the invention apparatus for drying swarf contaminated with cutting fluid comprises a drier housing a rotatable drum having a porous wall and adapted for moving swarf from substantially one end of the drum to the other, and means for circulating a flow of hot gas through the drum, characterised in that, an arcuate plenum chamber extends beneath a portion of the drum in close proximity the the porous wall and substantially along the length thereof, and in that the means for circulating the flow of hot gas is a fan or blower providing a forced convective flow to the plenum chamber and through a bed of swarf which in use occupies the drum adjacent to the plenum chamber.

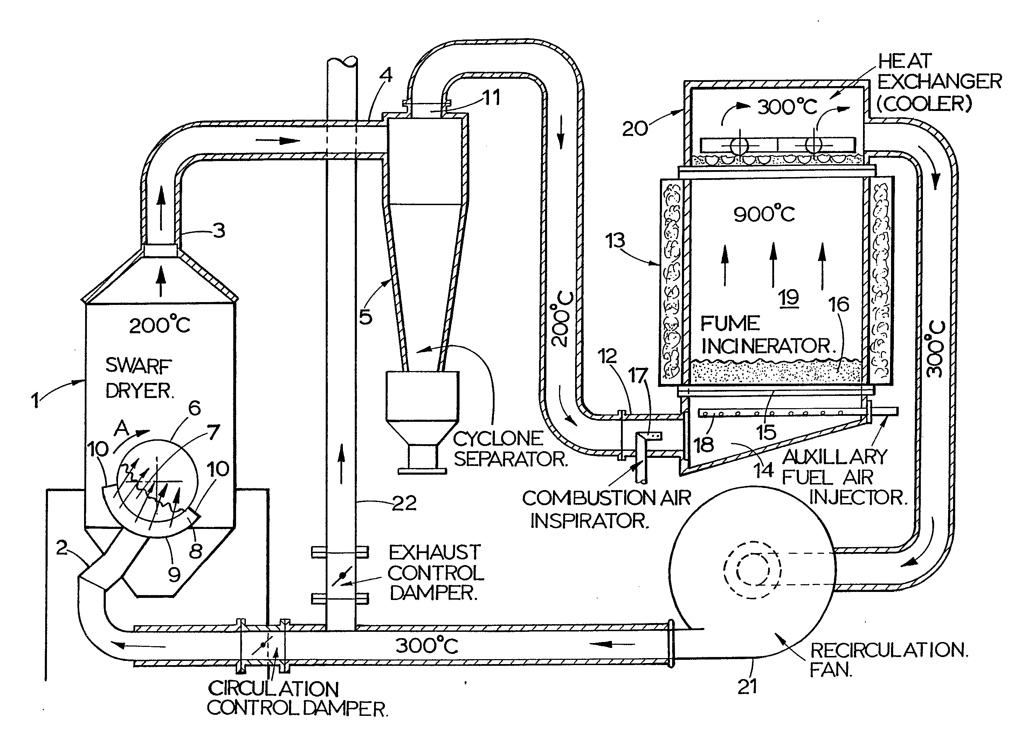

The accompanying drawing is a schematic drawing of a preferred swarf drying plant in accordance with the invention. In this example reference is made to the drying of non-ferrous swarf but it is to be understood that the plant could process ferrous swarf also.

The plant comprises a drying vessel 1 having a hot air inlet 2 at its lower end and an outlet 3 at its upper end which is connected to the inlet 4 of a cyclone separator 5. Within vessel 1 is mounted a porous drum 6 which is rotated about its horizontal axis and is provided with internal flights arranged in a helical manner for causing non-ferrous swarf 7 to be carried from one end of the drum into which it is fed by a suitable feeding device to the opposite end of the drum from which it is removed by a suitable delivery device. The feeding and delivery devices are preferably continuously operating conveyors, but other types might be used.

Air ingress into the drying vessel is minimised by controlling the internal pressure to be at or slightly above atmospheric pressure. The prevention of air ingress may be further assisted by the use of airlocks through which the infeed and outfeed material flows.

A plenum chamber 8 of arcuate shape in cross-section transverse to the drum axis, extends along the lower part of the drum 6 substantially throughout its length, and is bounded by an arcuate wall 9 and radial walls 10, the radially inner wall of the plenum chamber being constituted by the radially outer face of the porous drum 6 itself. This arrangement ensures that the forced flow of hot air from the inlet 2 is passed directly through the swarf which is lying in the bottom of the drum and promotes more efficient drying.

In fact, the rotation of the drum indicated by arrow A causes the swarf to adopt an offset position as shown, and accordingly the arcuate extent of the plenum chamber 8 is chosen to take account of the offset position, in order to try to ensure that all the drying gases pass through the swarf to provide a forced convective "drying" of the swarf.

A typical temperature for the drying gas at the inlet 2 is 300°C, and at the outlet 200°C, and it will be appreciated that no external or internal heat source is required for the swarf drying assembly 1, 6.

The exhaust gases at the outlet 3 will contain oil fumes, water and metal dust, the metal dust then being removed by the cyclone separator 5, which is of well known construction. The exhaust outlet 11 from the separator 5 is connected to the main inlet 12 of a fluidised bed fume incinerator or afterburner 13 which leads into plenum chamber 14 extending below the porous support 15 for the bed 16 of suitable refractory material. The plenum chamber and fluidised bed enables a more even distribution of the hot inflowing gases and better flame control in the incinerator.

Combustion air for the incinerator is supplied to an air inspirator 17 in inlet 12, and an auxiliary fuel/air injector assembly 18 is provided in chamber 14. The combustion of the exhaust gas combustion chamber 19 produces an exhaust gas temperature of, say, 900°C at the open upper end of incinerator 13, which leads into a heat exchanger 20 where the gases are cooled to, say, 300°C for recirculation by a fan 21 to inlet 2.

It is important to control the inspiration of the combustion air to ensure that stoichiometric amounts of air are employed in the combustion process such that the exhaust gases from the incinerator are as free as possible from oxygen, and will not therefore lead to oxidation of the swarf being dried. If desired the control may be achieved indirectly by monitoring $CO/CO_2$ content of the exhaust gases and adjusting the air used accordingly.

An exhaust stack 22 bleeds off a part of the exhaust gases fed by fan 21 so as to balance the quantity of air injected at 17.

The heat exchanger 20 is suitably controlled to provide the required temperature of gas fed to inlet 2.

Whilst the invention has been described in relation to the drying of non-ferrous swarf contaminated by cutting fluid, it might be used for the cleaning of other contaminated components such as ferrous mechining swarf, ferrous or non-ferrous particulate scrap contaminated with volatile and/or combustible substances (and possibly containing non-metallic materials).

**Claims**

1. A process for cleaning small metallic items (7) contaminated with oil or other volatile and/or combustible substances in a drying chamber (6) characterised by subjecting the items (7) to a forced convective flow of hot gas in the drying chamber, and burning (at 19) the exhaust gases in an incinerator (13) to generate heat which is used to elevate the temperature of the gas supply (2) to the drying chamber (16).

2. A process as claimed in Claim 1 in which the small items are non-ferrous swarf (7).

3. A process as claimed in Claim 1 or Claim 2 in which a proportion of the burnt gas itself is used as the gas supply to the drying chamber, after cooling (at 20) to a suitable temperature.

4. A process as claimed in any of the preceding claims in which a dust separator (5) is interposed between the outlet (3) of the drying chamber and the inlet (12) of the incinerator for removing metal dust which would otherwise contaminate the products of combustion of the incinerator.

5. A process as claimed in any of the preceding claims in which the forced convective flow of hot gas in the drying chamber is arranged to pass through the mass of metallic items which is supported on a porous support (6) through which the drying gas is forced under pressure.

6. A process as claimed in Claim 5 in which the porous support is in the form of a rotating drum (6) provided with means for causing the swarf to be carried through the drum, and an arcuate plenum chamber (8) extends substantially beneath the lower portion of the drum so that the bed of swarf is in direct contact with the hot gas flowing from the plenum chamber (8) and upwardly through the swarf.

7. A process as claimed in any of the preceding claims in which the incinerator (13) is arranged to utilise combustion air in stoichiometric amounts.

8. A process as claimed in any of the preceding claims in which the incinerator comprises a fluidised bed (16).

9. A process as claimed in Claim 8 in which the inflow of combustible gas to the incinerator is through a plenum chamber (18) extending beneath the fluidised bed (16).

10. A process as claimed in Claim 8 or Claim 9 in which the outflow of gas from the incinerator (13) is through a heat exchanger (20) positioned above the fluidised bed 16).

11. Apparatus for drying swarf (7) contaminated with cutting fluid comprising a drier (1) housing a rotatable drum (6) having a porous wall and adapted for moving swarf from substantially one end of the drum to the other, and means for circulating a flow of hot gas through the drum (6), characterised in that, an arcuate plenum chamber (8) extends beneath a portion of the drum in close proximity to the porous wall and substantially along the length thereof, and in that the means for circulating the flow of hot gas is a fan (21) or blower providing a forced convective flow to the plenum chamber (8) and through a bed of swarf (7) which in use occupies the drum adjacent to the plenum chamber.

12. Apparatus as claimed in Claim 11 further comprising a fluidised bed incinerator (13) which receives the combustible outflow gases from the drier (1) and incinerates the same to produce heat for the drying process.

13. Apparatus as claimed in Claim 12 in which the fluidised bed (16) receives the combustible outflow gases from a plenum chamber (14) extending beneath it.

HEAT EXCHANGER (COOLER)

20    300°C

4

11

3

200°C

SWARF DRYER.

1

A

6

7

10    10

8

9

2

5

200°C

22

CYCLONE SEPARATOR.

13    900°C

19    16

FUME INCINERATOR.

12    17

18    15    14

AUXILLARY FUEL AIR INJECTOR.

300°C

COMBUSTION AIR INSPIRATOR.

EXHAUST CONTROL DAMPER.

300°C

RECIRCULATION. FAN.

21

CIRCULATION CONTROL DAMPER.

0 253 596

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 548 651 (E.M. RAMSEY)<br>* Whole document * | 1-13 | C 22 B 1/00<br>F 26 B 23/02 |
| X | US-A-4 267 060 (N.H. TWYMAN)<br>* Columns 5-20 * | 1-13 | |
| X | US-A-3 627 289 (W. ERMAN)<br>* Whole document * | 1-13 | |
| X | US-A-2 836 901 (H.W. DAVIS)<br>* Whole document * | 1-13 | |
| X | US-A-2 720 710 (J.L. ERISMAN)<br>* Whole document * | 1-13 | |
| X | GB-A-2 104 634 (APV MITCHELL DRYERS LTD)<br>* Whole document * | 1-13 | TECHNICAL FIELDS SEARCHED (Int. Cl.4)<br><br>C 22 B |
| X | EP-A-0 067 139 (GÜLLSPÄNGS ELEKTROKEMISKA AB)<br>* Claims * | 1-13 | |
| A | US-A-4 133 635 (J.R. FELLNOR) | | |
| A | US-A-4 091 545 (T. IZAWA) | | |
| | --- -/- | | |

The present search report has been drawn up for all claims

| Place of search | Date of completion of the search | Examiner |
|---|---|---|
| THE HAGUE | 17-09-1987 | JACOBS J.J.E.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

| DOCUMENTS CONSIDERED TO BE RELEVANT | | | Page 2 | |
|---|---|---|---|---|
| Category | Citation of document with indication, where appropriate, of relevant passages | | Relevant to claim | CLASSIFICATION OF THE APPLICATION (Int. Cl.4) |
| A | US-A-3 869 112 (K.M. HABAYEB) | | | |
| | --- | | | |
| A | DE-A-3 134 989 (VOLKSWAGENWERK AG) | | | |
| | --- | | | |
| A | DE-A-3 009 238 (VOLKSWAGENWERK AG) | | | |
| | --- | | | |
| A | METALL, vol. 37, no. 4, April 1983, pages 382-384, Metall Verlag, Berlin, DE; BRIEM: "Wirtschaftliches Trocknen von Aluminiumspänen" | | | |
| | ----- | | | |
| | | | | TECHNICAL FIELDS SEARCHED (Int. Cl.4) |
| The present search report has been drawn up for all claims | | | | |

| Place of search | Date of completion of the search | Examiner |
|---|---|---|
| THE HAGUE | 17-09-1987 | JACOBS J.J.E.G. |